(19) Europäisches Patentamt
European Patent Office
Office européen des brevets

(11) **EP 3 936 895 B1**

(12) **EUROPEAN PATENT SPECIFICATION**

(45) Date of publication and mention of the grant of the patent:
**20.03.2024 Bulletin 2024/12**

(21) Application number: **19924591.1**

(22) Date of filing: **09.04.2019**

(51) International Patent Classification (IPC):
*G01S 17/08* (2006.01)    *G01S 17/10* (2020.01)
*G01S 17/931* (2020.01)    *G01S 7/4865* (2020.01)
*G01S 7/487* (2006.01)    *G01S 7/497* (2006.01)

(52) Cooperative Patent Classification (CPC):
**G01S 17/10; G01S 7/4865; G01S 7/4876;
G01S 7/497; G01S 17/931**

(86) International application number:
**PCT/CN2019/081876**

(87) International publication number:
**WO 2020/206602 (15.10.2020 Gazette 2020/42)**

(54) **DISTANCE MEASUREMENT METHOD, APPARATUS AND DEVICE**

DISTANZMESSVERFAHREN, GERÄT UND VORRICHTUNG

PROCÉDÉ, APPAREIL ET DISPOSITIF DE MESURE DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.01.2022 Bulletin 2022/02**

(73) Proprietor: **Huawei Technologies Co., Ltd.
Shenzhen, Guangdong 518129 (CN)**

(72) Inventors:
• **WU, Hongying
  Shenzhen, Guangdong 518129 (CN)**
• **JIANG, Tong
  Shenzhen, Guangdong 518129 (CN)**
• **LI, Qiang
  Shenzhen, Guangdong 518129 (CN)**
• **LI, Honglei
  Shenzhen, Guangdong 518129 (CN)**

(74) Representative: **Gill Jennings & Every LLP
The Broadgate Tower
20 Primrose Street
London EC2A 2ES (GB)**

(56) References cited:
**EP-A2- 2 947 477    US-A1- 2019 004 158**

EP 3 936 895 B1

**Description**

**TECHNICAL FIELD**

This application relates to ranging technologies, and in particular, to a ranging method, apparatus, and device.

**BACKGROUND**

A laser ranging technology has a wide application prospect in the fields of autonomous driving, atmospheric environment monitoring, geographic mapping, drones, and the like. The laser ranging technology is an optical remote sensing technology in which electromagnetic waves from an ultraviolet band to a far infrared band are used to detect characteristics of reflected light that is reflected by a measured object, to obtain related information of the measured object.

In the laser ranging technology, pulse-type laser ranging based on time of flight (time of flight, ToF) is mainly utilized, and its basic principle is as follows: A laser emits a laser pulse to a measured object; the laser pulse is reflected back after reaching the measured object; a difference between an emission moment of the laser pulse and a receiving moment of the laser pulse is recorded; and then a distance between the laser and the measured object is calculated by using the formula $R = \frac{ct}{2n}$. In the formula, R is the distance between the laser and the measured object, c is a propagation speed of the light in the air, and is about 299792458 m/s, n is a refractive index of the light in a propagation medium, and t is the difference between the emission moment of the laser pulse and the receiving moment of the laser pulse.

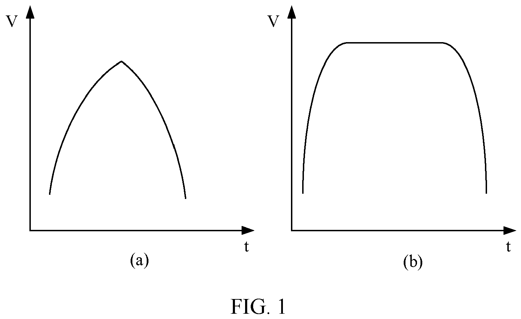

It may be understood that, if the emission moment of the laser pulse and the receiving moment of the laser pulse can be determined, the distance between the laser and the measured object can be calculated by using the foregoing formula. Currently, a received laser signal may be converted into an electrical signal such as a voltage, and then a receiving moment of an echo signal is determined by using a characteristic, for example, an amplitude value, of the electrical signal such as the voltage. However, for a common laser ranging system, when a requirement of long-distance ranging is met, a case in which an echo signal is saturated usually occurs in a process of measuring a short distance. For understanding, refer to FIG. 1. In FIG. 1, the horizontal coordinate indicates time, and the vertical coordinate indicates voltage, (a) in FIG. 1 shows an unsaturated echo signal, and (b) in FIG. 1 shows a saturated echo signal. Once an echo signal is saturated, a waveform "clipped" case shown in (b) in FIG. 1 occurs. To be specific, the saturated echo signal cannot indicate complete electrical signal characteristics of a laser pulse because an actual amplitude value of a clipped part of the waveform cannot be determined. Consequently, a receiving moment, of the echo signal, obtained by using a characteristic, for example, an amplitude value, of a voltage of the echo signal is inaccurate, and further, a ranging result is inaccurate.

US2019004158A1 describes methods and systems for at least partially removing extrinsic static noise from data obtained by an optical time-of-flight sensor using full-waveform analysis.

EP2947477A2 provides a time-of-flight sensor device that is capable of accurately recovering waveforms of reflected light pulses incident on the sensor's photo-receiver array using a low sampling rate.

**SUMMARY**

According to a first aspect, an embodiment of this application provides a ranging method according to appended claim 1, to accurately determine a distance between a measured object and a laser when a first echo signal is saturated. It can be learned that, according to the solutions in the embodiments of this application, the target distance compensation value suitable for the first echo signal may be determined based on the saturation degree of the first echo signal, to accurately determine the measured distance between the measured object and the laser.

In an implementation of the embodiments of this application, it is considered: when the first echo signal is the saturated echo signal, the receiving moment of the first echo signal cannot be accurately determined by using a conventional manner of determining the first echo signal. Consequently, a ranging error corresponding to the initial distance that is obtained through calculation by using the receiving moment is relatively large. Therefore, in an implementation of the embodiments of this application, a new method is introduced and is used to accurately determine the receiving moment of the first echo signal, to reduce the ranging error corresponding to the foregoing initial distance.

In an implementation of the embodiments of this application, when the first echo signal is a digital signal, and because the digital signal is discrete sampling points, in these discrete sampling points, a sampling point whose amplitude value is the first threshold does not necessarily exist. Because a sampling rate of a laser ranging system is relatively low, a time difference between two adjacent sampling points in the first echo signal is relatively large. In this case, a correspondingly determined receiving moment may also have a relatively large error. In the embodiments of this application, when the first echo signal is a digital signal, to improve a virtual sampling rate to reduce hardware implementation costs, and further to accurately determine the receiving moment of the first echo signal, the receiving moment of the first echo signal may be determined in a manner of calculating a rising edge equation. Specifically, a corresponding rising edge equation is fitted based on a partial echo signal in the first echo signal, where an independent variable of the rising edge equation is time, a dependent variable is amplitude, and the partial echo signal is an echo signal whose amplitude value increases as time increases; and according to the rising edge equation, a corresponding moment at which the amplitude value is the first threshold is determined as the receiving moment of the first echo signal.

In an implementation of the embodiments of this application, a correspondence between the saturation degree and a distance compensation value may be predetermined. Specifically, a laser may be used to emit a plurality of laser pulses to a calibration object, where an actual distance between the calibration object and the laser is known. Then, a plurality of calibration echo signals are obtained, where the plurality of calibration echo signals are obtained by converting a plurality of laser signals that are reflected back by the calibration object, all the plurality of calibration echo signals are digital signals, and each of the plurality of calibration echo signals corresponds to one saturation degree. A rising edge equation of each of the plurality of calibration echo signals is calculated by using the foregoing method of calculating the rising edge equation, and according to the rising edge equation corresponding to each of the plurality of calibration echo signals, a corresponding moment at which an amplitude value of each of the plurality of calibration echo signals is equal to the first threshold is determined as a receiving moment of each of the plurality of calibration echo signals. Subsequently, differences between a known actual distance between the calibration object and the laser and the plurality of calculated distances are separately calculated, to obtain a plurality of distance compensation values in calibration. Finally, the correspondence is determined based on each distance compensation value in the plurality of distance compensation values in calibration and a saturation degree corresponding to each distance compensation value.

According to the invention, the first echo signal is analyzed to obtain the saturation degree of the first echo signal. As described above, the first echo signal may be a digital signal. When the first echo signal is a digital signal, during specific implementation, the saturation degree of the first echo signal is determined based on a quantity of saturated sampling points whose amplitude values are greater than or equal to a second threshold in the first echo signal. It is understood that, according to the invention, a higher saturation degree of the first echo signal indicates a larger quantity of corresponding saturated sampling points whose amplitude values are greater than or equal to the second threshold, and a lower saturation degree of the first echo signal indicates a smaller quantity of corresponding saturated sampling points whose amplitude values are greater than or equal to the second threshold.

In an implementation of the embodiments of this application, it is considered that generally, an amplitude value of a saturated echo signal is relatively large in practice. Therefore, in this embodiment of this application, whether the first echo signal is a saturated echo signal may be preliminarily determined based on the maximum amplitude value of the first echo signal. Specifically, when the maximum amplitude value of the first echo signal is greater than the second threshold, it may be considered that the amplitude value of the first echo signal is relatively large, and correspondingly, a possibility that the first echo signal is preliminarily determined as a saturated echo signal is relatively large. Then, considering that the saturated echo signal has a case such as a waveform "clipped" case or a pulse width broadening case, in the embodiments of this application, the quantity of saturated sampling points whose amplitude values are greater than or equal to the second threshold may be used to determine whether the first echo signal generates waveform "clipped" or pulse width broadening. If the quantity of saturated sampling points whose amplitude values are greater than or equal to the second threshold is greater than or equal to a preset quantity, it is determined that the first echo signal generates waveform "clipped" or pulse width broadening. Therefore, it may be determined that the first echo signal is the saturated echo signal.

In an implementation of the embodiments of this application, during specific implementation of calculating the initial distance, the receiving moment of the first echo signal and a transmitting moment of the first echo signal may be determined; based on the receiving moment of the first echo signal and the transmitting moment of the first echo signal, a first time of flight of the laser light emitted by the laser between the laser and the measured object is obtained; and the initial distance is obtained through calculation based on the first time of flight.

In an implementation of the embodiments of this application, during specific implementation of calculating the initial distance, the initial distance may be determined by using a reference object whose actual distance from the laser is known. Specifically, the receiving moment of the first echo signal and a receiving moment of a second echo signal may be determined. The second echo signal is an echo signal obtained after the laser light emitted by the laser to the measured object is reflected by the reference object. That is, when the distance between the measured object and the laser is measured, a laser beam emitted by the laser is reflected by not only the measured object, but also the reference object. In this case, a second time of flight of the laser light emitted by the laser between the measured object and the reference object may be obtained through calculation based on the receiving moment of the first echo signal and the receiving moment of the second echo signal, and then a distance between the measured object and the reference object is obtained through calculation based on the second time of flight. Because the actual distance between the laser and the reference object is known, the initial distance may be obtained through calculation with reference to the known actual distance between the reference object and the laser and the distance between the measured object and the reference object. Specifically, if the reference object is located between the measured object and the laser, a sum of the known actual distance between the reference object and the laser and the distance between the measured object and the reference object may be calculated, to obtain the initial distance. Alternatively, if the measured object is located between the reference object and the laser, a difference between the known actual distance between the reference object and the laser and the distance between the measured object and the reference object may be calculated, to obtain the initial distance.

According to a second aspect, an embodiment of this application provides a ranging apparatus according to appended claim 7.

In an implementation of this embodiment of this application, the first echo signal is a digital signal. The third determining unit is specifically configured to: fit a corresponding rising edge equation based on a partial echo signal in the first echo signal, where an independent variable of the rising edge equation is time, a dependent variable is amplitude, and the partial echo signal is an echo signal whose amplitude value increases as time increases; and determine, according to the rising edge equation, a corresponding moment at which the amplitude value is the first threshold as the receiving moment of the first echo signal.

In an implementation of this embodiment of this application, the apparatus further includes: a second obtaining unit, configured to obtain a plurality of calibration echo signals, where each of the plurality of calibration echo signals corresponds to one saturation degree, the plurality of calibration echo signals are obtained after laser light emitted by the laser to a calibration object is reflected by the calibration object, and all the plurality of calibration echo signals are digital signals; a second calculation unit, configured to calculate a corresponding rising edge equation for each of the plurality of calibration echo signals; a fourth determining unit, configured to determine, according to the rising edge equation corresponding to each of the plurality of calibration echo signals, a corresponding moment at which an amplitude value of each of the plurality of calibration echo signals is the first threshold as a receiving moment of each of the plurality of calibration echo signals; a third calculation unit, configured to calculate a distance between the calibration object and the laser by using the receiving moment of each of the plurality of calibration echo signals, to obtain a calculated distance corresponding to each of the plurality of calibration echo signals; a fourth calculation unit, configured to separately calculate differences between a known actual distance between the calibration object and the laser and the plurality of calculated distances, to obtain a plurality of distance compensation values in calibration; and a fifth determining unit, configured to determine the correspondence based on each distance compensation value in the plurality of distance compensation values in calibration and a saturation degree corresponding to each distance compensation value.

ue.

According to the invention, the first echo signal includes a plurality of sampling points, and the determining a saturation degree of the first echo signal includes: In the plurality of sampling points, the saturation degree of the first echo signal is determined based on a quantity of saturated sampling points whose amplitude values are greater than or equal to a second threshold in the first echo signal, where the saturation degree is positively correlated with the quantity of saturated sampling points, and an amplitude value corresponding to the second threshold is greater than an amplitude value corresponding to the first threshold.

In an implementation of this embodiment of this application, that the first echo signal is a saturated echo signal includes: when a maximum amplitude value of the first echo signal is greater than or equal to the second threshold, and the quantity of saturated sampling points whose amplitude values are greater than or equal to the second threshold in the first echo signal is greater than or equal to a preset quantity, the first echo signal is the saturated echo signal.

In an implementation of this embodiment of this application, the first calculation unit is specifically configured to: obtain, based on the receiving moment of the first echo signal and a transmitting moment of the first echo signal, a first time of flight of the laser light emitted by the laser between the laser and the measured object; and obtain the initial distance through calculation based on the first time of flight.

In an implementation of this embodiment of this application, the first calculation unit is specifically configured to: obtain, based on the receiving moment of the first echo signal and a receiving moment of a second echo signal, a second time of flight of the laser light emitted by the laser between the measured object and a reference object, where the second echo signal is an echo signal obtained after the laser light emitted by the laser to the reference object is reflected by the reference object; obtain a distance between the measured object and the reference object through calculation based on the second time of flight; and calculate a sum of a known actual distance between the reference object and the laser and the distance between the measured object and the reference object, to obtain the initial distance; or calculate a difference between a known actual distance between the reference object and the laser and the distance between the measured object and the reference object, to obtain the initial distance.

According to a fourth aspect in accordance with appended claim 11, an embodiment of this application provides a computer-readable storage medium, including instructions.

## BRIEF DESCRIPTION OF DRAWINGS

FIG. 1 is a schematic diagram of a saturated echo signal and an unsaturated echo signal according to an embodiment of this application;

FIG. 2 is a schematic structural diagram of an autonomous driving system according to an embodiment of this application;

FIG. 3 is a schematic flowchart of a ranging method according to an embodiment of this application;

FIG. 4 is a schematic flowchart of determining a receiving moment of a first echo signal according to an embodiment of this application;

FIG. 5 is a schematic diagram of a first echo signal according to an embodiment of this application;

FIG. 6a is a schematic diagram of first echo signals with different saturation degrees according to an embodiment of this application;

FIG. 6b is a schematic diagram of rising edge curves of first echo signals with different saturation degrees according to an embodiment of this application;

FIG. 7 is a schematic structural diagram of a ranging apparatus according to an embodiment of this application; and

FIG. 8 is a schematic structural diagram of a ranging device according to an embodiment of this application.

## DESCRIPTION OF EMBODIMENTS

The following clearly and completely describes the technical solutions in the embodiments of this application with reference to the accompanying drawings in the embodiments of this application. It is clear that the described embodiments are merely some but not all of the embodiments of the present invention. All other embodiments obtained by persons skilled in the art based on the embodiments of the present invention shall fall within the protection scope of the present invention.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper cases, so that the embodiments described herein can be implemented in other orders than the order illustrated or described herein. Moreover, the terms "include", "contain", and any other variants mean to cover the non-exclusive inclusion. For example, a process, method, system, product, or device that includes a series of steps or units is not necessarily limited to those expressly listed steps or units, but may include other steps or units not expressly listed or inherent to such a process, method, system, product, or device.

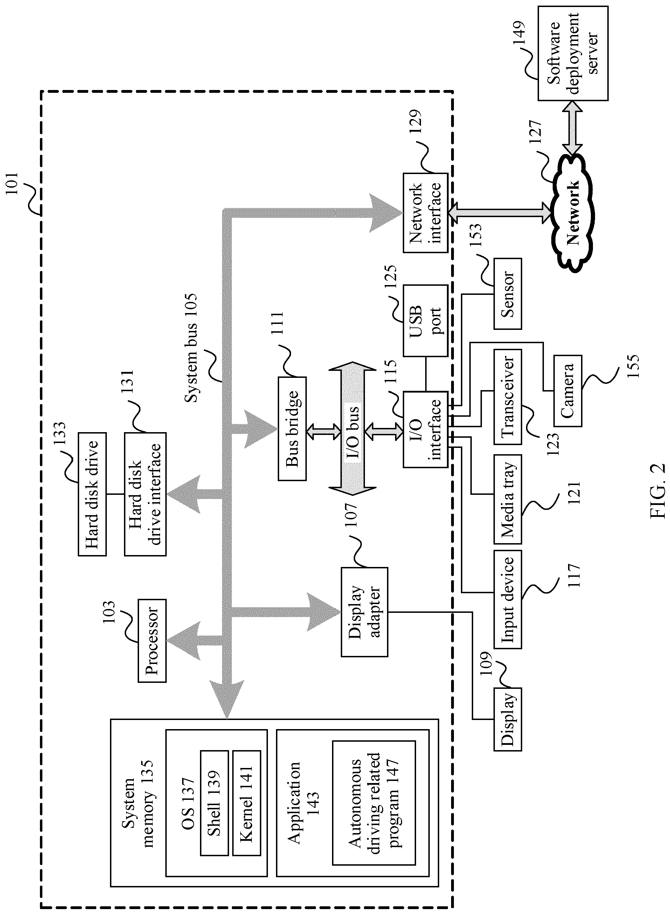

A ranging method provided in the embodiments of this application may be applied to an autonomous driving system shown in FIG. 2. FIG. 2 is a schematic structural diagram of the autonomous driving system according to an embodiment of this application. According to FIG. 2, the autonomous driving system 101 includes a processor 103, and the processor 103 is coupled to a system bus 105. The processor 103 may be one or more processors, and each processor may include one or more processor cores. A display adapter (video adapter) 107 may drive a display 109, and the display 109 is coupled to the system bus 105. The system bus 105 is coupled to an input/output (I/O) bus 113 through a bus bridge 111. An I/O interface 115 is coupled to the I/O bus. The I/O interface 115 communicates with a plurality of I/O devices, such as an input device 117 (for example, a keyboard, a mouse, or a touchscreen), a multimedia compact disc (media tray) 121 (for example, a CD-ROM or a multimedia interface), a transceiver 123 (which may send and/or receive a radio communication signal), a camera 155 (which may capture static and dynamic digital video pictures), and an external USB port 125. Optionally, an interface connected to the I/O interface 115 may be a USB port.

The processor 103 may be any conventional processor, including a reduced instruction set computing (RISC) processor, a complex instruction set computing (CISC) processor, or a combination thereof. Optionally, the processor may be a dedicated apparatus such as an application-specific integrated circuit (ASIC). Optionally, the processor 103 may be a neural-network processing unit or a combination of a neural-network processing unit and the foregoing conventional processor.

Optionally, in the embodiments described in this specification, the autonomous driving system 101 may be located far away from an autonomous driving vehicle, and may perform wireless communication with the autonomous driving vehicle. In other aspects, some processes described in this specification are performed on a processor disposed inside the autonomous driving vehicle, and others are performed by a remote processor, including taking actions for performing a single operation.

The autonomous driving system 101 may communicate with a software deployment server 149 by using a network interface 129. The network interface 129 is a hardware network interface, for example, a network interface card. A network 127 may be an external network, such as the Internet, or may be an internal network, such as the Ethernet or a virtual private network (VPN). Optionally, the network 127 may alternatively be a wireless network, for example, a Wi-Fi network or a cellular network.

A hard disk drive interface is coupled to the system bus 105. The hardware drive interface is connected to a hard disk drive. A system memory 135 is coupled to the system bus 105. Data running in the system memory 135 may include an operating system 137 and an application 143 of a computer 101.

The operating system includes a shell (Shell) 139 and a kernel (kernel) 141. The shell 139 is an interface between a user and the kernel (kernel) of the operating system. The shell is the outermost layer of the operating system. The shell manages interaction between the user and the operating system: waiting for input of the user, explaining the input of the user to the operating system, and processing various output results of the operating system.

The kernel 141 includes components of the operating system that are configured to manage a memory, a file, a peripheral, and a system resource. The kernel 141 directly interacts with hardware. The kernel of the operating system usually runs processes, provides inter-process communication, and provides CPU time slice management, interruption, memory management, I/O management, and the like.

The application 141 includes a program related to controlling autonomous driving of a vehicle, for example, a program for calculating a distance between the vehicle and an obstacle on a road, a program for managing interaction between an autonomous driving vehicle and an obstacle on a road, a program for controlling a route or speed of an autonomous driving vehicle, or a program for controlling interaction between an autonomous driving vehicle and another autonomous driving vehicle on a road. The application 141 also exists on a system of the software deployment server 149. In an embodiment, when the application 141 needs to be executed, the computer system 101 may download the application 141 from the software deployment server 149.

In the conventional technology, for a common laser ranging system such as a laser radar, when a requirement of long-distance ranging is met, a case in which an echo signal is saturated usually occurs in a process of measuring a short distance. The reason for this case is as follows: In a laser ranging system, when a received laser signal is converted into an electrical signal such as a voltage signal, the laser signal may be converted into a voltage within a specific range, such as a voltage within a range of 0 to 5 V For example, when a trans-impedance amplifier (trans-impedance amplifier, TIA) is used to convert the laser signal into the electrical signal, or when an analog-to-digital converter (analog-to-digital converter, ADC) is used to quantize an analog electrical signal into a digital signal, the TIA and the ADC each have an allowed input voltage range, for example, a voltage range of 0- to 5 V However, when the requirement of long-distance ranging is met, parameters for transmitting a laser pulse by the common laser ranging system need to meet the requirement of long-distance ranging, for example, a transmit power needs to be relatively large. However, for a short distance, if a laser pulse is transmitted at the transmit power, because the distance is relatively short, power loss in the laser pulse transmission process is relatively small. Correspondingly, a voltage value corresponding to a reflected echo signal may be relatively large. For example, a range of the voltage value corresponding to the reflected echo signal is 0 to 7 V, but a convertible voltage range of the laser ranging system is 0 to 5 V Therefore, during short distance ranging, a part whose voltage value is greater than 5 V in the echo signal is converted into a voltage of 5 V As a result, a waveform "clipped" case shown in (b) in FIG. 1 occurs.

In the conventional technology, when a receiving moment of the echo signal is determined, an amplitude value such as a voltage of the echo signal may be used to determine the receiving moment of the echo signal. For example, a moment corresponding to a maximum voltage in the echo signal may be determined as the receiving moment of the echo signal. For another example, a center of mass of the echo signal may be determined as the receiving moment of the echo signal. It may be understood that for a manner in which "a moment corresponding to a maximum voltage in the echo signal may be determined as the receiving moment of the echo signal", due to a waveform "clipped" case of a saturated echo signal, the moment corresponding to the maximum voltage cannot be accurately determined, that is, the receiving moment of the saturated echo signal cannot be determined. For a manner in which "a center of mass of the echo signal may be determined as the receiving moment of the echo signal", because an actual voltage value of a "clipped" part of the saturated echo signal cannot be determined, the center of mass of the saturated echo signal also cannot be accurately calculated, that is, the receiving moment of the saturated echo signal cannot be accurately determined. Consequently, a ranging result is inaccurate.

Moreover, the pulse width of the saturated echo signal may be broadened to affect an echo waveform, and a time walk error caused by an incomplete echo characteristic and a waveform change makes it difficult to accurately determine the receiving moment of the echo signal. A conventional time discrimination method such as peak discrimination or leading edge detection may cause a relatively large time walk error and also reduce ranging accuracy.

It may be understood that, during actual application, if a hardware circuit for converting an optical signal into an electrical signal in the laser ranging system is improved, and a range of voltage that is converted from a laser signal is expanded, for example, the foregoing voltage range of 0 to 5 V is expanded to a voltage range of 0 to 10 V, the foregoing problem that the receiving moment of the saturated echo signal cannot be accurately determined may be resolved. However, costs for improving the hardware circuit are relatively high. In view of this, an embodiment of this application provides a ranging method, so that a hardware circuit may not need to be improved, and a measured distance between a measured object and a laser can be accurately determined even if an echo signal is saturated.

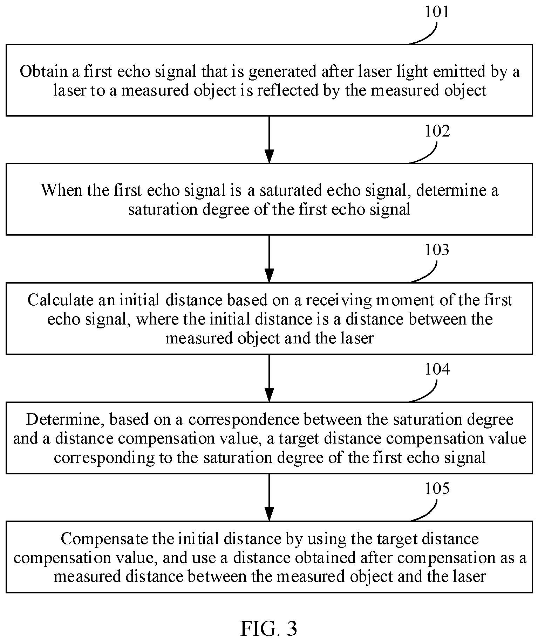

FIG. 3 is a flowchart of a ranging method according to an embodiment of this application. The ranging method provided in this embodiment of this application may be performed by a controller. The controller may be a digital signal processing (digital signal processing, DSP) chip or the like. This is not specifically limited in this embodiment of this application. The method may be implemented by using the following steps 101 to 105.

Step 101: Obtain a first echo signal that is obtained after laser light emitted by a laser to a measured object is reflected by the measured object.

In this embodiment of this application, when ranging is performed on the measured object, a laser pulse emitted by the laser is reflected back by the measured object, and then is received by a receive end of a laser ranging system. The receive end converts a laser light signal into an electrical signal, and the electrical signal is the first echo signal.

The measured object is not specifically limited in this embodiment of this application, and the measured object may be an object capable of reflecting a laser pulse.

In this embodiment of this application, the pulse emitted by the laser may be any one of a Gaussian pulse, a sine wave, and a square wave. The laser may be a laser in the laser ranging system, or may be a time-of-flight (time-of-flight, ToF) depth camera laser. This is not specifically limited in this embodiment of this application.

For each pixel in a receiving field of view of the laser ranging system, after the laser emits the laser pulse, the receive end receives an analog electrical signal within a period of time (this period of time is determined by a maximum distance measurement range of the laser ranging system). In this embodiment of this application, the analog electrical signal or a data signal that is obtained through sampling by an analog-to-digital converter (analog-to-digital converter, ADC) is referred to as a full waveform echo signal. The full waveform echo signal includes the first echo signal corresponding to the measured object, and may also include an echo signal corresponding to another object. In this embodiment of this application, during specific implementation of step 101, the full waveform echo signal may be first obtained, and then the first echo signal is extracted from the full waveform echo signal. Specifically, the first echo signal may be a sampling point set in the full waveform echo signal, and in the sampling point set, there is a point whose amplitude value is greater than or equal to a first threshold. For example, an amplitude value of a point whose amplitude value is the largest in the sampling point set is greater than or equal to the first threshold.

A specific value of the first threshold is not specifically limited in this embodiment of this application. In an implementation of this embodiment of this application, for example, the specific value of the first threshold may be determined based on a false alarm threshold of the laser ranging system. It may be understood that generally, a part whose amplitude value is less than the false alarm threshold in the obtained first echo signal may be considered as noise. Therefore, in an implementation of this embodiment of this application, the first threshold may be equal to or close to the false alarm threshold.

The full waveform echo signal is not specifically limited in this embodiment of this application. The full waveform echo signal may be a digital signal, or may be an analog signal. Amplitude values of a digital signal are non-consecutive in terms of time, and the digital signal may include discrete sampling points. Amplitude values of an analog signal are consecutive in terms of time. The first echo signal is not specifically limited in this embodiment of this application. The first echo signal may be a digital signal, or may be an analog signal. It may be understood that when the first echo signal is the digital signal, the first echo signal may include a plurality of sampling points.

A method for obtaining the first echo signal is described below by using an example in which the full waveform echo signal is the digital signal.

First, a search range R = [a, b] may be initialized, where a is a left endpoint of the range R, and b is a right endpoint of the range R. Usually, initialization is performed to implement a = 1, that is, a is the first sampling point, and b is a sampling point sequence number corresponding to a saturated distance threshold. Only when a distance between the measured object and the laser is less than the saturated distance threshold, the first echo signal corresponding to the measured object may be a saturated echo signal. A specific value of the saturated distance threshold may be less than or equal to the maximum distance measurement range of the laser ranging system. Subsequently, the search range R of the full waveform echo signal is searched for a first sampling point x whose amplitude value is greater than or equal to the first threshold. After the sampling point x is found, the point x may be used as a start point to select n points rightward, and a set of selected sampling points is the first echo signal. Alternatively, the search range R of the full waveform echo signal is searched for a first point y whose amplitude value is greater than or equal to the first threshold in a rising-edge-segment echo signal and a first point z whose amplitude value is less than or equal to the first threshold in a falling-edge-segment echo signal, and a set of sampling points selected by using y as a start point and z as an end point is the first echo signal. The rising-edge-segment echo signal is an echo signal whose general amplitude value changing trend is that an amplitude value increases as time increases, and the falling-edge-segment echo signal is an echo signal whose general amplitude value changing trend is that an amplitude value decreases as time increases.

Then, the left endpoint a of the search range R may be updated, where a = x + n + 1, or a = z + 1. The foregoing steps are repeated to search for a next first echo signal.

Step 102: When the first echo signal is a saturated echo signal, determine a saturation degree of the first echo signal.

According to the invention, when a maximum amplitude value of the first echo signal is greater than or equal to a second threshold, and a quantity of saturated sampling points whose amplitude values are greater than or equal to the second threshold in the first echo signal is greater than or equal to a preset quantity, the first echo signal is the saturated echo signal.

Considering that generally an amplitude value of a saturated echo signal is relatively large in practice, whether the first echo signal is a saturated echo signal may be preliminarily determined based on the maximum amplitude value of the first echo signal. Specifically, when the maximum amplitude value of the first echo signal is greater than the second threshold, it may be considered that the amplitude value of the first echo signal is relatively large, and correspondingly, a possibility that the first echo signal is preliminarily determined as a saturated echo signal is relatively large.

As described above, the saturated echo signal may encounter a case such as a waveform "clipped" case or a pulse width broadening case. In this embodiment of this application, the quantity of saturated sampling points whose amplitude values are greater than or equal to the second threshold may be used to determine whether the first echo signal encounters waveform "clipped" or pulse width broadening. Generally, if no waveform "clipped" or pulse width broadening occurs in the first echo signal, the quantity of saturated sampling points whose amplitude values are greater than or equal to the second threshold is less than the preset quantity. Correspondingly, if the quantity of saturated sampling points whose amplitude values are greater than or equal to the second threshold is greater than or equal to the preset quantity, it may be determined that the first echo signal encounters waveform "clipped" or pulse width broadening. Therefore, it may be determined that the first echo signal is the saturated echo signal. In this embodiment of this application, an amplitude value corresponding to the second threshold is greater than an amplitude value corresponding to the first threshold. A specific value of the second threshold is not specifically limited in this embodiment of this application. The second threshold may be an amplitude value less than or equal to an amplitude value corresponding to a "clipped" part of the saturated echo signal, and the amplitude value is also referred to as a saturation amplitude threshold. For example, the second threshold may be equal to the saturation amplitude threshold of the laser ranging system. For another example, the second threshold may be half of the saturation amplitude threshold. For another example, the second threshold may be three quarters of the saturation amplitude threshold.

In this embodiment of this application, the first echo signal may be analyzed to obtain the saturation degree of the first echo signal. As described above, the first echo signal may be a digital signal. When the first echo signal is a digital signal, during specific implementation, the saturation degree of the first echo signal is determined based on the quantity of saturated sampling points whose amplitude values are greater than or equal to the second threshold in the first echo signal. According to the invention, a higher saturation degree of the first echo signal indicates a larger quantity of corresponding saturated sampling points whose amplitude values are greater than or equal to the second threshold, and a lower saturation degree of the first echo signal indicates a smaller quantity of corresponding saturated sampling points whose amplitude values are greater than or equal to the second threshold. According to the invention, the saturation degree of the first echo signal is determined based on the quantity of saturated sampling points whose amplitude values are greater than or equal to the second threshold in the first echo signal. According to the invention, the quantity of saturated sampling points is determined as the saturation degree of the first echo signal. For example, if a quantity of points whose amplitude values are greater than or equal to the second threshold in the first echo signal is 3, a corresponding saturation degree of the first echo signal is 3.

During specific implementation, when a sampling rate of the ADC is relatively low, even if saturation degrees of two or more saturated echoes are different, it is difficult to differ the saturated echoes in a quantity of saturated sampling points. For this reason, a difference between saturation degrees of different saturated echoes may be amplified through interpolation. In this way, even if the difference between the saturation degrees of the different saturated echoes is small, the difference can be indicated by quantities of saturated sampling points.

Step 103: Calculate an initial distance based on a receiving moment of the first echo signal. The initial distance is a distance between the measured object and the laser.

A specific implementation of step 103 is not specifically limited in this embodiment of this application. Two possible implementations are described below.

In an implementation of step 103, the receiving moment of the first echo signal and a transmitting moment of the first echo signal may be determined, and a difference between the receiving moment of the first echo signal and the transmitting moment of the first echo signal is calculated, to obtain a first time of flight of the laser light emitted by the laser between the laser and the measured object, and then the initial distance is obtained through calculation by using the first time of flight and a formula R = ct/2n. In the formula, R is the initial distance, c is a propagation speed of the light in the air, n is a refractive index of the light in a propagation medium, and t is the first time of flight. A specific implementation of determining the receiving moment of the first echo signal is not specifically limited in this embodiment of this application. A specific implementation of determining the transmitting moment of the first echo signal is not specifically limited in this embodiment of this application either. For example, a moment at which the laser emits the laser light to the measured object may be recorded, and the moment is determined as the transmitting moment of the first echo signal.

In another implementation of step 103, the initial distance may be determined by using a reference object whose actual distance from the laser is known. Specifically, the receiving moment of the first echo signal and a receiving moment of a second echo signal may be determined. The second echo signal is an echo signal obtained after laser light emitted by the laser to the reference object is reflected by the reference object. In this embodiment of this application, considering that in practice, the laser emits a plurality of beams of laser light to the reference object, theoretically, receiving moments of a plurality of echo signals obtained after the plurality of beams of laser light are reflected by the measured object are the same, and the laser light emitted by the laser to the reference object and the laser light emitted by the laser to the measured object may be a same beam of laser light, or may be two different beams of laser light. This is not specifically limited in this embodiment of this application. In this embodiment of this application, a second time of flight of the laser light emitted by the laser between the measured object and the reference object may be obtained through calculation based on the receiving moment of the first echo signal and the receiving moment of the second echo signal, and then a distance between the measured object and the reference object is obtained through calculation by using the second time of flight and a formula $R = ct/2n$. In the formula, $R$ is the distance between the measured object and the reference object, $c$ is a propagation speed of the light in the air, $n$ is a refractive index of the light in a propagation medium, and $t$ is the second time of flight. Because the actual distance between the laser and the reference object is known, the initial distance may be obtained through calculation with reference to the known actual distance between the reference object and the laser and the distance between the measured object and the reference object. Specifically, if the reference object is located between the measured object and the laser, a sum of the known actual distance between the reference object and the laser and the distance between the measured object and the reference object may be calculated, to obtain the initial distance. Alternatively, if the measured object is located between the reference object and the laser, a difference between the known actual distance between the reference object and the laser and the distance between the measured object and the reference object may be calculated, to obtain the initial distance.

Step 104: Determine, based on a correspondence between the saturation degree and a distance compensation value, a target distance compensation value corresponding to the saturation degree of the first echo signal.

Step 105: Compensate the initial distance by using the target distance compensation value, and use a distance obtained after compensation as a measured distance between the measured object and the laser.

During actual application, ranging errors corresponding to the foregoing initial distance are different when saturation degrees of the first echo signal are different. Therefore, in this embodiment of this application, the target distance compensation value corresponding to the saturation degree of the first echo signal may be determined based on the saturation degree, and the target distance compensation value is used to compensate the initial distance, to obtain the measured distance between the measured object and the laser. Specifically, in this embodiment of this application, after the saturation degree of the first echo signal is determined in step 102, the target distance compensation value corresponding to the saturation degree of the first echo signal may be determined based on a prestored correspondence between a saturation degree and a distance compensation value. Subsequently, the target distance compensation value is added to the distance obtained through calculation, to obtain the measured distance between the measured object and the laser.

It can be learned that, according to the solutions in the embodiments of this application, the target distance compensation value suitable for the first echo signal may be determined based on the saturation degree of the first echo signal, to accurately determine the measured distance between the measured object and the laser.

As described above, a specific implementation of determining the receiving moment of the first echo signal is not specifically limited in this embodiment of this application. However, it is considered: when the first echo signal is the saturated echo signal, the receiving moment of the first echo signal cannot be accurately determined by using a conventional manner of determining the first echo signal. Consequently, a ranging error corresponding to the initial distance that is obtained through calculation by using the receiving moment is relatively large. Therefore, in an implementation of this embodiment of this application, a new method is introduced and is used to accurately determine the receiving moment of the first echo signal, to reduce the ranging error corresponding to the foregoing initial distance. Specifically, it is determined one or two corresponding moments at which an amplitude value is a first threshold. In addition, an earlier moment of the two moments is determined as the receiving moment of the first echo signal, or the one moment is determined as the receiving moment of the first echo signal.

During actual application, for the first echo signal, a start receiving moment of the first echo signal is almost unchanged regardless of whether the first echo signal is saturated or how much the saturation degree is. Therefore, in this embodiment of this application, if the first echo signal is the saturated echo signal, the start receiving moment of the first echo signal may be determined as the receiving moment of the first echo signal.

In this embodiment of this application, considering that the obtained first echo signal may include some noise, in this embodiment of this application, an earliest moment corresponding to a non-noise part of the first echo signal may be determined as the start receiving moment of the first echo signal. In this embodiment of this application, noise in the first echo signal and a valid echo signal may be distinguished by using the first threshold, to reduce noise interference. Specifically, a part whose amplitude value is less than the first threshold in the first echo signal may be determined as the noise. In other words, a part whose amplitude value is greater than or equal to the first threshold in the first echo signal is determined as the valid echo signal. Therefore, in this embodiment of this application, a corresponding moment at which an amplitude value is the first threshold may be first determined, and the start receiving moment of the first echo signal is determined based on the moment. It should be noted that generally, a waveform of a saturated echo signal is similar to that shown in (b) in FIG. 1. When the amplitude value is the first threshold, that is, when a value of the vertical coordinate in FIG. 1 is equal to the first threshold, there may be one or two intersection points with the waveform of the saturated echo signal. In other words, when the amplitude value is the first threshold, there may be one or two corresponding moments. In this embodiment of this application, if there is one moment corresponding to the first threshold, it may be considered that the one moment is an initial receiving moment of the first echo signal. Alternatively, if there are two moments corresponding to the first threshold, it may be considered that an earlier moment of the two moments is an initial receiving moment of the first echo signal, and a later moment of the two moments is close to an end receiving moment of the first echo signal. Therefore, in this application, if there is one corresponding moment at which an amplitude value is equal to the first threshold in the first echo signal, the one moment is determined as the start receiving moment of the first echo signal; or if there are two corresponding moments at which an amplitude value is equal to the first threshold in the first echo signal, an earlier moment of the two moments is determined as the start receiving moment of the first echo signal.

As described above, the first echo signal mentioned in this embodiment of this application may be an analog signal, or may be a digital signal. It may be understood that when the first echo signal is an analog signal, and because the analog signal is consecutive in terms of time, the moment corresponding to the first threshold may be directly determined.

When the first echo signal is a digital signal, and because the digital signal is discrete sampling points, in these discrete sampling points, a sampling point whose amplitude value is the first threshold does not necessarily exist. Therefore, when the moment corresponding to the first threshold is to be determined, the moment corresponding to a sampling point whose amplitude value is closest to the first threshold may be determined as the moment corresponding to the first threshold.

It may be understood that, generally, the false alarm threshold is less than an amplitude value of the "clipped" part in the saturated echo signal. In other words, the first threshold is less than the amplitude value of the "clipped" part in the saturated echo signal. Therefore, by using the method provided in this embodiment of this application, the receiving moment of the first echo signal can be determined without considering the amplitude value of the "clipped" part in the saturated echo signal, different from the conventional technology in which the amplitude value of the "clipped" part in the saturated echo signal needs to be considered when the receiving moment of the saturated echo signal is determined. In addition, because the moment corresponding to the first threshold is closer to the start receiving moment of the first echo signal, the moment is relatively little affected by a waveform shape change brought by pulse width broadening, and a time walk error introduced by the waveform change can be reduced. Compared with that in the conventional technology, the determined receiving moment of the first echo signal is more accurate in the method provided in this embodiment of this application.

As described above, when the first echo signal is a digital signal, and because the digital signal is discrete sampling points, in these discrete sampling points, a sampling point whose amplitude value is the first threshold does not necessarily exist. Therefore, when the moment corresponding to the first threshold is to be determined, the moment corresponding to a sampling point whose amplitude value is closest to the first threshold may be determined as the moment corresponding to the first threshold. It may be understood that, because a sampling rate of a laser ranging system is relatively low, a time difference between two adjacent sampling points in the first echo signal is relatively large. In this case, a correspondingly determined receiving moment may also have a relatively large error. In this embodiment of this application, when the first echo signal is a digital signal, to improve a virtual sampling rate to reduce hardware implementation costs, and further to accurately determine the receiving moment of the first echo signal, the receiving moment of the first echo signal may be determined in a manner of calculating a rising edge equation.

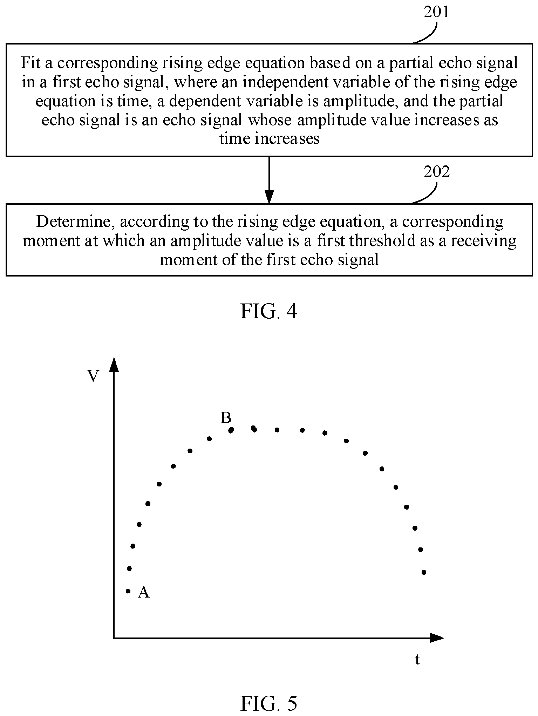

FIG. 4 is a schematic flowchart of determining a receiving moment of a first echo signal according to an embodiment of this application. The method may be implemented by using, for example, the following steps 201 and 202.

Step 201: Fit a corresponding rising edge equation based on a partial echo signal in a first echo signal, where an independent variable of the rising edge equation is time, a dependent variable is amplitude, and the partial echo signal is an echo signal whose amplitude value increases as time increases.

Step 202: Determine, according to the rising edge equation, a corresponding moment at which an amplitude value is a first threshold as a receiving moment of the first echo signal.

In this embodiment of this application, the rising edge equation of the first echo signal may be used to indicate, to some extent, a function relationship between the amplitude value of the partial echo signal in the first echo signal and time. The partial echo signal is an echo signal whose amplitude value increases as time increases. Specifically, for understanding, refer to FIG. 5. FIG. 5 is a schematic diagram of a first echo signal according to an embodiment of this application. The rising edge equation may be a function relationship obtained by using amplitudes and time of some or all sampling points from a sampling point A to a sampling point B in FIG. 3a.

The following specifically describes methods for calculating a rising edge equation according to this embodiment of this application.

   (1) Based on a curve shape of the partial echo signal, it is assumed that a curve equation of the partial echo signal is a function of a specific type (for example, a linear equation or a parabolic equation). Then, any plurality of sampling points whose amplitude values are greater than or equal to a first threshold in the partial echo signal are selected, where a quantity of the selected sampling points is determined by the type of the assumed function. For example, if it is assumed that the curve equation is the linear equation, any two sampling points may be selected; or if it is assumed that the curve equation is the parabolic equation, any three sampling points need to be selected. Finally, undetermined coefficients are solved by using an undetermined coefficient method, to obtain a function expression of the rising edge equation.

   (2) A function expression of the rising edge equation is obtained through calculation by using a curve fitting method such as an interpolation method and a least square method based on all sampling points whose amplitude values are greater than or equal to a first threshold in the partial echo signal.

It may be understood that calculation in the method (1) is simple, calculation complexity of the method (2) is slightly higher than that of the method (1), but curve fitting accuracy of the method (2) is higher than that of the method (1). During actual application, it may be determined according to an actual situation that the calculation method (1) or the calculation method (2) is used to calculate the rising edge equation. If calculation complexity is used as a criterion, the method (1) may be used to calculate the rising edge equation. If accuracy is a main criterion, the method (2) may be used to calculate the rising edge equation.

In this embodiment of this application, after the rising edge equation of the first echo signal is determined, the moment corresponding to the first threshold may be determined as the receiving moment of the first echo signal according to the rising edge equation.

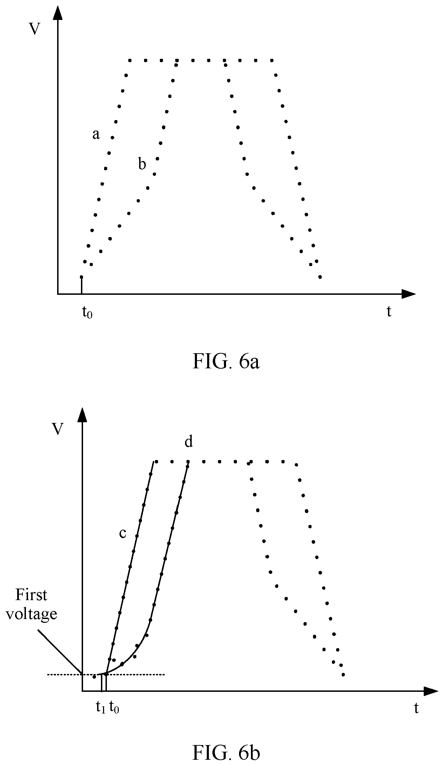

It should be noted that, during actual application, the receiving moment determined by using the rising edge equation is more accurate than the receiving moment determined by using the conventional technology. However, there may be some errors due to noise. Specifically, for understanding, refer to FIG. 6a and FIG. 6b. FIG. 6a is a schematic diagram of first echo signals with different saturation degrees according to an embodiment of this application. FIG. 6b is a schematic diagram of rising edge curves of first echo signals with different saturation degrees according to an embodiment of this application. For the first echo signals shown in FIG. 6a and FIG. 6b, actual start receiving moments of the first echo signals are all $t_0$. In FIG. 6a, a saturation degree of a first echo signal a is higher than a saturation degree of a first echo signal b. For the first echo signal a, sampling points whose amplitude values increase as time increases are almost on a same straight line and are less affected by noise. A rising edge curve (a curve corresponding to a rising edge equation is a curve c in FIG. 5b.) that is obtained through curve fitting passes through all sampling points, and therefore, curve fitting accuracy is relatively high. In this way, a receiving moment calculated by using a rising edge equation is almost equal to $t_0$. For the first echo signal b, noise affects a waveform of the foregoing partial echo signal, and further affects curve fitting accuracy. A rising edge curve that is obtained through curve fitting is a curve d in FIG. 6b. It can be learned that an error exists between the receiving moment obtained through calculation and $t_0$. Correspondingly, an error corresponding to an initial distance obtained through calculation by using the foregoing receiving moment is also relatively large. In a possible implementation, to reduce noise interference to improve curve fitting accuracy, when curve fitting is performed, some data sampling points may be deleted, for example, first p sampling points that are greater than or equal to a second voltage in the foregoing partial echo signal are deleted. A value of p is not specifically limited, and may be 2, 3, or 4. As described above, the correspondence between the saturation degree and the distance compensation value may be predetermined. In this embodiment of this application, a prestored correspondence between the saturation degree and the distance compensation value may be determined in a calibration manner.

Specifically, first, a laser may be used to emit a plurality of laser pulses to a calibration object whose actual distance from the laser is known, and then a plurality of calibration echo signals obtained by converting a plurality of laser signals reflected back by the calibration object are obtained, where the plurality of calibration echo signals are all digital signals. In this embodiment of this application, for example, calibration echo signals with various saturation degrees can be obtained in a manner of adjusting a transmit power of the laser, a reflectance, an amplification coefficient of automatic gain control (automatic gain control, AGC), or an amplification coefficient of a variable gain amplifier (variable gain amplifier, VGA). Alternatively, when factors such as the transmit power, the calibration object, or the VGA/AGC amplification coefficient remain unchanged, a plurality of saturated echo signals with different degrees are obtained by adjusting the known actual distance between the calibration object and the laser.

Then, a saturation degree of each calibration echo signal is estimated. For example, a quantity of saturated sampling points whose amplitude values are greater than or equal to the second threshold in each calibration signal is determined as the saturation degree of each calibration echo signal, to obtain $num_1$, $num_2$, ... , $num_k$, ... , $num_N$, where $num_k$ is a saturation degree of the $k^{th}$ calibration echo signal, and N is a quantity of the calibration echo signals.

Then, a rising edge equation of each calibration echo signal in the plurality of calibration echo signals is calculated by using the method of calculating the rising edge equation, and according to the rising edge equation corresponding to each of the plurality of calibration echo signals, a corresponding moment at which an amplitude value of each of the plurality of calibration echo signals is the first threshold is determined as a receiving moment of each of the plurality of calibration echo signals; and a distance between the calibration object and the laser is calculated by using the receiving moment of each of the plurality of calibration echo signals, to obtain a calculated distance corresponding to each of the plurality of calibration echo signals.

Then, differences between a known actual distance between the calibration object and the laser and the plurality of calculated distances are separately calculated, to obtain a plurality of distance compensation values in calibration $\sigma_1$, $\sigma_2$, . .., $\sigma_k$, . .., $\sigma_N$, where $\sigma_k$ is a distance compensation value corresponding to the $k^{th}$ calibration echo signal.

Finally, the correspondence is determined based on each distance compensation value in the plurality of distance compensation values in calibration and a saturation degree corresponding to each distance compensation value. That is, the correspondence is determined based on a distance compensation value $\sigma_k$ corresponding to a $k^{th}$ calibration echo signal and a saturation degree $num_k$ of the $k^{th}$ calibration echo signal.

In this embodiment of this application, a correspondence between the saturation degree $num_k$ of the $k^{th}$ calibration echo signal and the distance compensation value in calibration $\sigma_k$ (k = 1, 2, ... , N) corresponding to the $k^{th}$ calibration echo signal may be stored. In this embodiment of this application, the correspondence may be converted into a look-up table or a function expression.

Based on the ranging method provided in the foregoing embodiments, the embodiments of this application further provide a corresponding ranging apparatus and a ranging device. The ranging apparatus and the ranging device is described below with reference to the accompanying drawings.

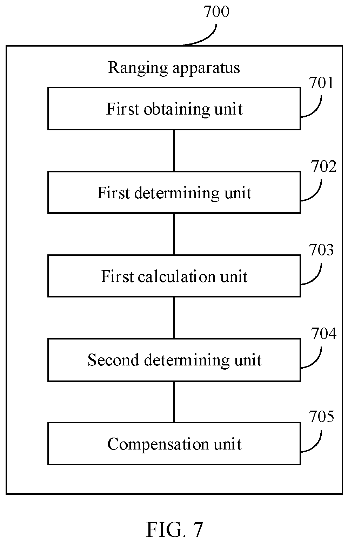

FIG. 7 is a schematic structural diagram of a ranging apparatus according to an embodiment of this application. The ranging apparatus 700 shown in FIG. 7 includes: a first obtaining unit 701, a first determining unit 702, a first calculation unit 703, a second determining unit 704, and a compensation unit 705, where

the first obtaining unit 701 is configured to obtain a first echo signal that is obtained after laser light emitted by a laser to a measured object is reflected by the measured object;

the first determining unit 702 is configured to: when the first echo signal is a saturated echo signal, determine a saturation degree of the first echo signal;

the first calculation unit 703 is configured to calculate an initial distance based on a receiving moment of the first echo signal, where the initial distance is a distance between the measured object and the laser;

the second determining unit 704 is configured to determine, based on a correspondence between the saturation degree and a distance compensation value, a target distance compensation value corresponding to the saturation degree of the first echo signal; and

the compensation unit 705 is configured to compensate the initial distance by using the target distance compensation value, and use a distance obtained after compensation as a measured distance between the measured object and the laser.

According to the invention, the apparatus further includes:

a third determining unit, configured to determine one or two corresponding moments at which an amplitude value of the first echo signal is a first threshold, and determine an earlier moment of the two moments or the one moment as the receiving moment of the first echo signal, where a part whose amplitude value is less than the first threshold in the first echo signal is noise.

In a possible implementation, the first echo signal is a digital signal, and the third determining unit is specifically configured to:

fit a corresponding rising edge equation based on a partial echo signal in the first echo signal, where an independent variable of the rising edge equation is time, a dependent variable is amplitude, and the partial echo signal is an echo signal whose amplitude value increases as time increases; and

determine, according to the rising edge equation, a corresponding moment at which the amplitude value is the first threshold as the receiving moment of the first echo signal.

In a possible implementation, the apparatus further includes:

a second obtaining unit, configured to obtain a plurality of calibration echo signals, where each of the plurality of calibration echo signals corresponds to one saturation degree, the plurality of calibration echo signals are obtained after laser light emitted by the laser to a calibration object is reflected by the calibration object, and all the plurality of calibration echo signals are digital signals;

a second calculation unit, configured to calculate a corresponding rising edge equation for each of the plurality of calibration echo signals;

a fourth determining unit, configured to determine, according to the rising edge equation corresponding to each of the plurality of calibration echo signals, a corresponding moment at which an amplitude value of each of the plurality of calibration echo signals is the first threshold as a receiving moment of each of the plurality of calibration echo signals;

a third calculation unit, configured to calculate a distance between the calibration object and the laser by using the receiving moment of each of the plurality of calibration echo signals, to obtain a calculated distance corresponding to each of the plurality of calibration echo signals;

a fourth calculation unit, configured to separately calculate differences between a known actual distance between the calibration object and the laser and the plurality of calculated distances, to obtain a plurality of distance compensation values in calibration; and

a fifth determining unit, configured to determine the correspondence based on each distance compensation value in the plurality of distance compensation values in calibration and a saturation degree corresponding to each distance compensation value.

According to the invention, the first echo signal includes a plurality of sampling points, and the determining a saturation degree of the first echo signal includes: determining, in the plurality of sampling points, the saturation degree of the first echo signal based on a quantity of saturated sampling points whose amplitude values are greater than or equal to a second threshold in the first echo signal, where the saturation degree is positively correlated with the quantity of saturated sampling points, and an amplitude value corresponding to the second threshold is greater than an amplitude value corresponding to the first threshold.

In a possible implementation, that the first echo signal is a saturated echo signal includes:

when a maximum amplitude value of the first echo signal is greater than or equal to the second threshold, and

the quantity of saturated sampling points whose amplitude values are greater than or equal to the second threshold in the first echo signal is greater than or equal to a preset quantity,

the first echo signal is the saturated echo signal.

In a possible implementation, the first calculation unit 703 is specifically configured to:

obtain, based on the receiving moment of the first echo signal and a transmitting moment of the first echo signal, a first time of flight of the laser light emitted by the laser between the laser and the measured object; and

obtain the initial distance through calculation based on the first time of flight.

In a possible implementation, the first calculation unit 703 is specifically configured to:

obtain, based on the receiving moment of the first echo signal and a receiving moment of a second echo signal, a second time of flight of the laser light emitted by the laser between the measured object and a reference object, where the second echo signal is an echo signal obtained after the laser light emitted by the laser to the reference object is reflected by the reference object;

obtain a distance between the measured object and the reference object through calculation based on the second time of flight; and

calculate a sum of a known actual distance between the reference object and the laser and the distance between the measured object and the reference object, to obtain the initial distance; or calculate a difference between a known actual distance between the reference object and the laser and the distance between the measured object and the reference object, to obtain the initial distance.

Because the apparatus 700 is an apparatus corresponding to the ranging method provided in the foregoing method embodiments, a specific implementation of each unit in the apparatus 700 is a same concept as that in the foregoing method embodiments. Therefore, for the specific implementation of each unit in the apparatus 700, refer to the description parts of the ranging method in the foregoing method embodiments. Details are not described herein again.

An embodiment of this application further provides a ranging device. The device includes a processor and a memory.

The memory is configured to store instructions.

The processor is configured to execute the instructions in the memory, to perform the ranging method provided in the foregoing method embodiments.

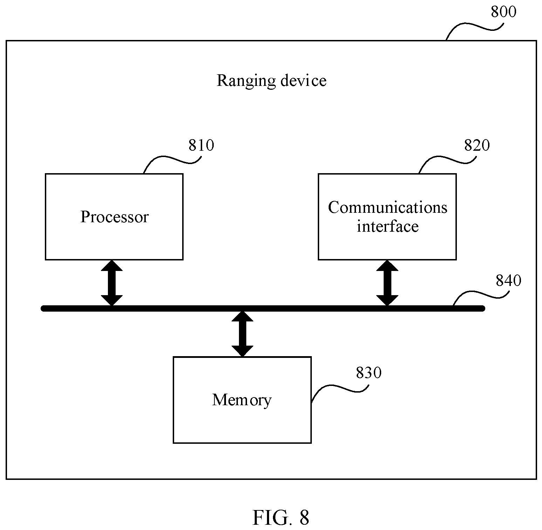

It should be noted that the ranging device in this embodiment of this application may use a hardware structure shown in FIG. 8. FIG. 8 is a schematic structural diagram of a ranging device according to an embodiment of this application.

As shown in FIG. 8, the ranging device 800 includes a processor 810, a communications interface 820, and a memory 830. There may be one or more processors 810 in the ranging device 800, and FIG. 8 shows one processor as an example. In this embodiment of this application, the processor 810, the communications interface 820, and the memory 830 may be connected by using a bus system or in another manner, and are connected through a bus system 840 as an example in FIG. 8.

The processor 810 may be a central processing unit (central processing unit, CPU), a network processor (network processor, NP), or a combination of the CPU and the NP. The processor 810 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination of the CPLD and the FPGA.

The memory 830 may include a volatile memory (English: volatile memory), for example, a random access memory (random access memory, RAM). The memory 830 may alternatively include a non-volatile memory (English: non-volatile memory), for example, a flash memory (English: flash memory), a hard disk drive (hard disk drive, HDD), or a solid-state drive (solid-state drive, SSD). The memory 830 may further include a combination of the foregoing types of memories.

The memory 830 may store, in the memory 830, the correspondence between the saturation degree and the distance compensation value in the foregoing embodiments.

Optionally, the memory 830 stores an operating system and a program, an executable module, or a data structure, or a subset thereof, or an extended set thereof. The program may include various operation instructions used to implement various operations. The operating system may include various system programs, to implement various basic services and process hardware-based tasks. The processor 810 may read the program in the memory 830, to implement the ranging method provided in this embodiment of this application.

The bus system 840 may be a peripheral component interconnect (peripheral component interconnect, PCI) bus, an extended industry standard architecture (extended industry standard architecture, EISA) bus, or the like. The bus system 840 may be classified into an address bus, a data bus, a control bus, and the like. For ease of representation, only one thick line is used to represent the bus in FIG. 8, but this does not mean that there is only one bus or only one type of bus.

It should be noted that, when the ranging device in FIG. 8 is used in the autonomous driving system in FIG. 2, the processor 810 in FIG. 8 may be equivalent to the processor 103 in FIG. 2. The communications interface 820 in FIG. 8 may be equivalent to the bus bridge 111 in FIG. 2. The memory 830 in FIG. 8 may be equivalent to the system memory 135 in FIG. 2. The system bus 840 in FIG. 8 is equivalent to the system bus 105 in FIG. 2.

It should be noted that, the ranging device in FIG. 8 may be also used in another system different from the autonomous driving system shown in FIG. 2, and details are not described herein again.

An embodiment of this application further provides a computer-readable storage medium, including instructions. When the instructions are run on a computer, the computer is enabled to perform the ranging method according to the method embodiments.

An embodiment of this application further provides a computer program product including instructions. When the computer program product is run on a computer, the computer is enabled to perform the ranging method according to the method embodiments. It may be clearly understood by persons skilled in the art that, for the purpose of convenient and brief description, for a detailed working process of the foregoing system, apparatus, and unit, refer to a corresponding process in the foregoing method embodiments, and details are not described herein again.

An embodiment of this application further provides a mobile platform. The mobile platform includes a laser, a receiver, and the ranging apparatus 700 according to the foregoing embodiments. The laser is configured to emit laser light to a measured object, and the receiver is configured to receive an echo signal formed through reflection by the measured object. The ranging apparatus 700 is configured to obtain a distance between the measured object and the laser based on the echo signal received by the receiver.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the current technology, or all or a part of the technical solutions may be implemented in the form of a software product. The computer software product is stored in a storage medium and includes several instructions for instructing a computer device (which may be a personal computer, a server, a network device or the like) to perform all or a part of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

**Claims**

1.  A ranging method, wherein the method comprises:

    obtaining (101) a first echo signal that is obtained after laser light emitted by a laser to a measured object is reflected by the measured object;
    when the first echo signal is a saturated echo signal (102), determining a saturation degree of the first echo signal, **characterised in that** the first echo signal comprises a plurality of sampling points, and the determining a saturation degree of the first echo signal comprises:

    determining, in the plurality of sampling points, the saturation degree of the first echo signal based on a quantity of saturated sampling points whose amplitude values are greater than or equal to a second threshold in the first echo signal, wherein the saturation degree is positively correlated with the quantity of saturated sampling points, and an amplitude value corresponding to the second threshold is greater than an amplitude value corresponding to a first threshold;
    determining one or two corresponding moments at which an amplitude value of the first echo signal is the first threshold, and determining an earlier moment of the two moments or the one moment as the receiving moment of the first echo signal, wherein a part whose amplitude value is less than the first threshold in the first echo signal is noise;
    calculating (103) an initial distance based on a receiving moment of the first echo signal, wherein the initial distance is a distance between the measured object and the laser;
    determining (104), based on a correspondence between the saturation degree and a distance compensation value, a target distance compensation value corresponding to the saturation degree of the first echo signal; and
compensating (105) the initial distance by using the target distance compensation value, wherein a distance obtained after compensation is used as a measured distance between the measured object and the laser.

2.  The method according to claim 1, wherein the first echo signal is a digital signal, and the determining one corresponding moment at which an amplitude value of the first echo signal is the first threshold, and determining the one moment as the receiving moment of the first echo signal comprises:

    fitting, to at least two sampling points in the plurality of sampling points, a corresponding rising edge equation based on a partial echo signal in the first echo signal, wherein an independent variable of the rising edge equation is time, a dependent variable is amplitude, and the partial echo signal is an echo signal whose amplitude value increases as time increases; and
    determining, according to the rising edge equation, a corresponding moment at which the amplitude value is the first threshold as the receiving moment of the first echo signal.

3.  The method according to claim 1 or 2, wherein before the compensating the initial distance by using the target distance compensation value, the method further comprises:

    obtaining a plurality of calibration echo signals, wherein each of the plurality of calibration echo signals corresponds to one saturation degree, the plurality of calibration echo signals are obtained after laser light emitted by the laser to a calibration object is reflected by the calibration object, and all the plurality of calibration echo signals are digital signals;
    calculating a corresponding rising edge equation for each of the plurality of calibration echo signals;
    determining, according to the rising edge equation corresponding to each of the plurality of calibration echo signals, a corresponding moment at which an amplitude value of each of the plurality of calibration echo signals is the first threshold as a receiving moment of each of the plurality of calibration echo signals;
    calculating a distance between the calibration object and the laser by using the receiving moment of each of the plurality of calibration echo signals, to obtain a calculated distance corresponding to each of the plurality of calibration echo signals;
    separately calculating differences between a known actual distance between the calibration object and the laser and the plurality of calculated distances, to obtain a plurality of distance compensation values in calibration; and determining the correspondence based on each distance compensation value in the plurality of distance compensation values in calibration and a saturation degree corresponding to each distance compensation value.

4. The method according to any one of claims 1 to 3, wherein that the first echo signal is a saturated echo signal comprises:
when a maximum amplitude value of the first echo signal is greater than or equal to the second threshold, and the quantity of saturated sampling points whose amplitude values are greater than or equal to the second threshold in the first echo signal is greater than or equal to a preset quantity, the first echo signal is the saturated echo signal.

5. The method according to any one of claims 1 to 4, wherein the calculating an initial distance based on a receiving moment of the first echo signal comprises:

obtaining, based on the receiving moment of the first echo signal and a transmitting moment of the first echo signal, a first time of flight of the laser light emitted by the laser between the laser and the measured object; and obtaining the initial distance through calculation based on the first time of flight.

6. The method according to any one of claims 1 to 4, wherein the calculating an initial distance based on a receiving moment of the first echo signal comprises:

obtaining, based on the receiving moment of the first echo signal and a receiving moment of a second echo signal, a second time of flight of the laser light emitted by the laser between the measured object and a reference object, wherein the second echo signal is an echo signal obtained after the laser light emitted by the laser to the reference object is reflected by the reference object; obtaining a distance between the measured object and the reference object through calculation based on the second time of flight; and calculating a sum of a known actual distance between the reference object and the laser and the distance between the measured object and the reference object, to obtain the initial distance; or calculating a difference between a known actual distance between the reference object and the laser and the distance between the measured object and the reference object, to obtain the initial distance.

7. A ranging apparatus (700), wherein the apparatus comprises:

a first obtaining unit (701), configured to obtain a first echo signal that is obtained after laser light emitted by a laser to a measured object is reflected by the measured object, **characterised in that** the first echo signal comprises a plurality of sampling points;
a first determining unit (702), configured to:

when the first echo signal is a saturated echo signal, determine a saturation degree of the first echo signal;
determine, in the plurality of sampling points, the saturation degree of the first echo signal based on a quantity of saturated sampling points whose amplitude values are greater than or equal to a second threshold in the first echo signal, wherein the saturation degree is positively correlated with the quantity of saturated sampling points, and an amplitude value corresponding to the second threshold is greater than an amplitude value corresponding to a first threshold;

a first calculation unit (703), configured to calculate an initial distance based on a receiving moment of the first echo signal, wherein the initial distance is a distance between the measured object and the laser;
a second determining unit (704), configured to determine, based on a correspondence between the saturation degree and a distance compensation value, a target distance compensation value corresponding to the saturation degree of the first echo signal
a third determining unit, configured to determine one or two corresponding moments at which an amplitude value of the first echo signal is the first threshold, and determine an earlier moment of the two moments or the one moment as the receiving moment of the first echo signal, wherein a part whose amplitude value is less than the first threshold in the first echo signal is noise; and
a compensation unit (705), configured to compensate the initial distance by using the target distance compensation value, wherein a distance obtained after compensation is used as a measured distance between the measured object and the laser.

8. The apparatus according to claim 7, wherein the first echo signal is a digital signal, and the third determining unit is specifically configured to:

fit, to at least two sampling points in the plurality of sampling points, a corresponding rising edge equation based on a partial echo signal in the first echo signal, wherein an independent variable of the rising edge equation is time, a dependent variable is amplitude, and the partial echo signal is an echo signal whose amplitude value increases as time increases; and determine, according to the rising edge equation, a corresponding moment at which the amplitude value is the first threshold as the receiving moment of the first echo signal.

9. The apparatus according to claim 7 or 8, wherein the apparatus further comprises:

a second obtaining unit, configured to obtain a plurality of calibration echo signals, wherein each of the plurality of calibration echo signals corresponds to one saturation degree, the plurality of calibration echo signals are obtained after laser light emitted by the laser to a calibration object is reflected by the calibration object, and all the plurality of calibration echo signals are digital signals;
a second calculation unit, configured to calculate a corresponding rising edge equation for each of the plurality of calibration echo signals;
a fourth determining unit, configured to determine, according to the rising edge equation corresponding to each of the plurality of calibration echo signals, a corresponding moment at which an amplitude value of each of the plurality of calibration echo signals is the first threshold as a receiving moment of each of the plurality of calibration echo signals;
a third calculation unit, configured to calculate a distance between the calibration object and the laser by using the receiving moment of each of the plurality of calibration echo signals, to obtain a calculated distance corresponding to each of the plurality of calibration echo signals;
a fourth calculation unit, configured to separately calculate differences between a known actual distance between the calibration object and the laser and the plurality of calculated distances, to obtain a plurality of distance compensation values in calibration; and
a fifth determining unit, configured to determine the correspondence based on each distance compensation value in the plurality of distance compensation values in calibration and a saturation degree corresponding to each distance compensation value.

10. The apparatus according to any one of claims 7 to 9, wherein that the first echo signal is a saturated echo signal comprises:

when a maximum amplitude value of the first echo signal is greater than or equal to the second threshold, and the quantity of saturated sampling points whose amplitude values are greater than or equal to the second threshold in the first echo signal is greater than or equal to a preset quantity, the first echo signal is the saturated echo signal.

11. A computer-readable storage medium, comprising instructions, wherein when the instructions are run on a computer, the computer is enabled to perform the method according to any one of claims 1 to 6.

**Patentansprüche**

1. Entfernungsmessverfahren, wobei das Verfahren Folgendes umfasst:

Erhalten (101) eines ersten Echosignals, das erhalten wird, nachdem durch einen Laser auf ein Messobjekt emittiertes Laserlicht durch das Messobjekt reflektiert wird,
wenn das erste Echosignal ein gesättigtes Echosignal (102) ist, Bestimmen eines Sättigungsgrades des ersten Echosignals, **dadurch gekennzeichnet, dass** das erste Echosignal eine Vielzahl von Abtastpunkten umfasst, und das Bestimmen eines Sättigungsgrades des ersten Echosignals Folgendes umfasst:

Bestimmen des Sättigungsgrades des ersten Echosignals in der Vielzahl von Abtastpunkten basierend auf einer Menge gesättigter Abtastpunkte, deren Amplitudenwerte größer oder gleich einem zweiten Schwellenwert in dem ersten Echosignal sind, wobei der Sättigungsgrad positiv mit der Menge gesättigter Abtastpunkte korreliert ist und ein dem zweiten Schwellenwert entsprechender Amplitudenwert größer als ein einem ersten Schwellenwert entsprechender Amplitudenwert ist;
Bestimmen eines oder zweier entsprechender Zeitpunkte, zu denen ein Amplitudenwert des ersten Echosignals der erste Schwellenwert ist, und Bestimmen eines früheren Zeitpunkts der zwei Zeitpunkte oder des einen Zeitpunkts als den Empfangszeitpunkt des ersten Echosignals, wobei ein Teil, dessen Amplitudenwert kleiner als der erste Schwellenwert in dem ersten Echosignal ist, Rauschen ist;
Berechnen (103) einer Anfangsentfernung basierend auf einem Empfangzeitpunkt des ersten Echosignals, wobei die Anfangsentfernung eine Entfernung zwischen dem Messobjekt und dem Laser ist;

Bestimmen (104), basierend auf einer Entsprechung zwischen dem Sättigungsgrad und einem Entfernungskompensationswert, eines Sollentfernungskompensationswertes entsprechend dem Sättigungsgrad des ersten Echosignals, und
Kompensieren (105) der Anfangsentfernung unter Verwendung des Sollentfernungskompensationswertes, wobei eine nach der Kompensation erhaltene Entfernung als eine gemessene Entfernung zwischen dem Messobjekt und dem Laser verwendet wird.

2. Verfahren gemäß Anspruch 1, wobei das erste Echosignal ein digitales Signal ist, und das Bestimmen eines entsprechenden Zeitpunkts, zu dem ein Amplitudenwert des ersten Echosignals der erste Schwellenwert ist, und das Bestimmen des einen Zeitpunkts als den Empfangszeitpunkt des ersten Echosignals Folgendes umfasst:

   Anpassen einer entsprechenden Gleichung der ansteigenden Flanke an mindestens zwei Abtastpunkte in der Vielzahl von Abtastpunkten basierend auf einem partiellen Echosignal in dem ersten Echosignal, wobei eine unabhängige Variable der Gleichung der ansteigenden Flanke die Zeit ist, eine abhängige Variable die Amplitude ist und das partielle Echosignal ein Echosignal ist, dessen Amplitudenwert mit zunehmender Zeit zunimmt; und
   Bestimmen eines entsprechenden Zeitpunkts, zu dem der Amplitudenwert der erste Schwellenwert ist, anhand der Gleichung der ansteigenden Flanke als den Empfangszeitpunkt des ersten Echosignals.

3. Verfahren gemäß Anspruch 1 oder 2, wobei das Verfahren vor dem Kompensieren der Anfangsentfernung durch Verwendung des Sollentfernungskompensationswertes fernes Folgendes umfasst:

   Erhalten einer Vielzahl von Kalibrierungsechosignalen, wobei jedes der Vielzahl von Kalibrierungsechosignalen einem Sättigungsgrad entspricht, die Vielzahl von Kalibrierungsechosignalen erhalten wird, nachdem durch den Laser auf ein Kalibrierungsobjekt emittierte Laserlicht durch das Kalibrierungsobjekt reflektiert wird, und wobei alle der Vielzahl von Kalibrierungsechosignalen digitale Signale sind, Berechnen einer entsprechenden Gleichung der ansteigenden Flanke für jedes der Vielzahl von Kalibrierungsechosignalen,
   Bestimmen, anhand der Gleichung der ansteigenden Flanke, die jedem der Vielzahl von Kalibrierungsechosignalen entspricht, eines entsprechenden Zeitpunkts, zu dem ein Amplitudenwert jedes der Vielzahl von Kalibrierungsechosignalen der erste Schwellenwert ist, als einen Empfangszeitpunkt jedes der Vielzahl von Kalibrierungsechosignalen,
Berechnen einer Entfernung zwischen dem Kalibrierungsobjekt und dem Laser unter Verwendung des Empfangszeitpunkts jedes der Vielzahl von Kalibrierungsechosignalen, um eine berechnete Entfernung zu erhalten, die jedem der Vielzahl von Kalibrierungsechosignalen entspricht;
separates Berechnen von Differenzen zwischen einer bekannten tatsächlichen Entfernung zwischen dem Kalibrierungsobjekt und dem Laser und der Vielzahl von berechneten Entfernungen, um eine Vielzahl von Entfernungskompensationswerten bei der Kalibrierung zu erhalten, und
Bestimmen der Entsprechung basierend auf jedem Entfernungskompensationswert in der Vielzahl von Entfernungskompensationswerten bei der Kalibrierung und einem Sättigungsgrad, der jedem Entfernungskompensationswert entspricht.

4. Verfahren gemäß einem der Ansprüche 1 bis 3, wobei dass das erste Echosignal ein gesättigtes Echosignal ist, Folgendes umfasst:
wenn ein maximaler Amplitudenwert des ersten Echosignals größer oder gleich dem zweiten Schwellenwert ist und die Menge gesättigter Abtastpunkte, deren Amplitudenwerte größer oder gleich dem zweiten Schwellenwert in dem ersten Echosignal sind, größer oder gleich einer voreingestellten Menge ist, das erste Echosignal das gesättigte Echosignal ist.

5. Verfahren gemäß einem der Ansprüche 1 bis 4, wobei das Berechnen einer Anfangsentfernung basierend auf einem Empfangszeitpunkt des ersten Echosignals Folgendes umfasst:

   Erhalten, basierend auf dem Empfangszeitpunkt des ersten Echosignals und einem Übertragungszeitpunkt des ersten Echosignals, einer ersten Laufzeit des durch den Laser emittierten Laserlichts zwischen dem Laser und dem Messobjekt; und
   Erhalten der Anfangsentfernung durch Berechnen basierend auf der ersten Laufzeit.

6. Verfahren gemäß einem der Ansprüche 1 bis 4, wobei das Berechnen einer Anfangsentfernung basierend auf einem Empfangszeitpunkt des ersten Echosignals Folgendes umfasst:

   Erhalten, basierend auf dem Empfangszeitpunkt des ersten Echosignals und einem Empfangszeitpunkt eines zweiten Echosignals, einer zweiten Laufzeit des durch den Laser emittierten Laserlichts zwischen dem Messobjekt und einem Referenzobjekt, wobei das zweite Echosignal ein Echosignal ist, das erhalten wird, nachdem das durch den Laser auf das Referenzobjekt emittierte Laserlicht durch das Referenzobjekt reflektiert wird,

Erhalten einer Entfernung zwischen dem Messobjekt und dem Referenzobjekt durch Berechnen basierend auf der zweiten Laufzeit; und Berechnen einer Summe einer bekannten tatsächlichen Entfernung zwischen dem Referenzobjekt und dem Laser und der Entfernung zwischen dem Messobjekt und dem Referenzobjekt, um die Anfangsentfernung zu erhalten, oder Berechnen einer Differenz zwischen einer bekannten tatsächlichen Entfernung zwischen dem Referenzobjekt und dem Laser und der Entfernung zwischen dem Messobjekt und dem Referenzobjekt, um die Anfangsentfernung zu erhalten.

7.  Entfernungsmessvorrichtung (700), wobei die Vorrichtung Folgendes umfasst:

    eine erste Erhalteeinheit (701), die dazu konfiguriert ist, ein erstes Echosignal zu erhalten, das erhalten wird, nachdem durch einen Laser auf ein Messobjekt emittiertes Laserlicht durch das Messobjekt reflektiert wird, **dadurch gekennzeichnet, dass** das erste Echosignal eine Vielzahl von Abtastpunkten umfasst,
    eine erste Bestimmungseinheit (702), die dazu konfiguriert ist:

    wenn das erste Echosignal ein gesättigtes Echosignal ist, einen Sättigungsgrad des ersten Echosignals zu bestimmen, den Sättigungsgrad des ersten Echosignals in der Vielzahl von Abtastpunkten basierend auf einer Menge gesättigter Abtastpunkte zu bestimmen, deren Amplitudenwerte größer oder gleich einem zweiten Schwellenwert in dem ersten Echosignal sind, wobei der Sättigungsgrad positiv mit der Menge gesättigter Abtastpunkte korreliert ist und ein dem zweiten Schwellenwert entsprechender Amplitudenwert größer als ein einem ersten Schwellenwert entsprechender Amplitudenwert ist;
    eine erste Berechnungseinheit (703), die dazu konfiguriert ist, eine Anfangsentfernung basierend auf einem Empfangszeitpunkt des ersten Echosignals zu berechnen, wobei die Anfangsentfernung eine Entfernung zwischen dem Messobjekt und dem Laser ist; eine zweite Bestimmungseinheit (704), die dazu konfiguriert ist, basierend auf einer Entsprechung zwischen dem Sättigungsgrad und einem Entfernungskompensationswert, einen Sollentfernungskompensationswert entsprechend dem Sättigungsgrad des ersten Echosignals zu bestimmen, und

eine dritte Bestimmungseinheit, die dazu konfiguriert ist, einen oder zwei entsprechende Zeitpunkte zu bestimmen, zu denen ein Amplitudenwert des ersten Echosignals der erste Schwellenwert ist, und einen früheren Zeitpunkt der zwei Zeitpunkte oder den einen Zeitpunkt als den Empfangszeitpunkt des ersten Echosignals zu bestimmen, wobei ein Teil, dessen Amplitudenwert kleiner als der erste Schwellenwert in dem ersten Echosignal ist, Rauschen ist; und

eine Kompensationseinheit (705), die dazu konfiguriert ist, die Anfangsentfernung unter Verwendung des Sollentfernungskompensationswertes zu kompensieren, wobei eine nach der Kompensation erhaltene Entfernung als eine gemessene Entfernung zwischen dem Messobjekt und dem Laser verwendet wird.

8.  Vorrichtung gemäß Anspruch 7, wobei das erste Echosignal ein digitales Signal ist, und die dritte Bestimmungseinheit speziell dazu konfiguriert ist:

    eine entsprechende Gleichung der ansteigenden Flanke an mindestens zwei Abtastpunkte in der Vielzahl von Abtastpunkten basierend auf einem partiellen Echosignal in dem ersten Echosignal anzupassen, wobei eine unabhängige Variable der Gleichung der ansteigenden Flanke die Zeit ist, eine abhängige Variable die Amplitude ist und das partielle Echosignal ein Echosignal ist, dessen Amplitudenwert mit zunehmender Zeit zunimmt; und
    einen entsprechenden Zeitpunkt, zu dem der Amplitudenwert der erste Schwellenwert ist, anhand der Gleichung der ansteigenden Flanke als den Empfangszeitpunkt des ersten Echosignals zu bestimmen.

9.  Vorrichtung gemäß Anspruch 7 oder 8, wobei die Vorrichtung ferner Folgendes umfasst:

    eine zweite Erhalteeinheit, die dazu konfiguriert ist, eine Vielzahl von Kalibrierungsechosignalen zu erhalten, wobei jedes der Vielzahl von Kalibrierungsechosignalen einem Sättigungsgrad entspricht, die Vielzahl von Kalibrierungsechosignalen erhalten wird, nachdem durch den Laser auf ein Kalibrierungsobjekt emittiertes Laserlicht durch das Kalibrierungsobjekt reflektiert wird, und alle der Vielzahl von Kalibrierungsechosignalen digitale Signale sind,

eine zweite Berechnungseinheit, die dazu konfiguriert ist, eine entsprechende Gleichung der ansteigenden Flanke für jedes der Vielzahl von Kalibrierungsechosignalen zu berechnen,

eine vierte Bestimmungseinheit, die dazu konfiguriert ist, anhand der Gleichung der ansteigenden Flanke, die jedem der Vielzahl von Kalibrierungsechosignalen entspricht, einen entsprechenden Zeitpunkt, zu dem ein Amplitudenwert jedes der Vielzahl von Kalibrierechosignalen der erste Schwellenwert ist, als einen Empfangszeitpunkt jedes der Vielzahl von Kalibrierungsechosignalen zu bestimmen ,

eine dritte Berechnungseinheit, die dazu konfiguriert ist, eine Entfernung zwischen dem Kalibrierungsobjekt und dem Laser unter Verwendung des Empfangszeitpunkts jedes der Vielzahl von Kalibrierechosignalen zu berechnen, um eine berechnete Entfernung zu erhalten, die jedem der Vielzahl von Kalibrierechosignalen entspricht;

eine vierte Berechnungseinheit, die dazu konfiguriert ist, separat Differenzen zwischen einer bekannten tatsächlichen Entfernung zwischen dem Kalibrierungsobjekt und dem Laser und der Vielzahl von berechneten Entfernungen berechnen, um eine Vielzahl von Entfernungskompensationswerten bei der Kalibrierung zu erhalten, und

eine fünfte Bestimmungseinheit, die dazu konfiguriert ist, die Entsprechung basierend auf jedem Entfernungskompensationswert in der Vielzahl von Entfernungskompensationswerten bei der Kalibrierung und einem Sättigungsgrad, der jedem Entfernungskompensationswert entspricht, zu bestimmen.

10. Vorrichtung gemäß einem der Ansprüche 7 bis 9, wobei dass das erste Echosignal ein gesättigtes Echosignal ist, Folgendes umfasst: wenn ein maximaler Amplitudenwert des ersten Echosignals größer oder gleich dem zweiten Schwellenwert ist und die Menge gesättigter Abtastpunkte, deren Amplitudenwerte größer oder gleich dem zweiten Schwellenwert in dem ersten Echosignal sind, größer oder gleich einer voreingestellten Menge ist, das erste Echosignal das gesättigte Echosignal ist.

11. Computerlesbares Speichermedium, das Anweisungen enthält, wobei beim Ausführen der Anweisungen auf einem Computer der Computer in die Lage versetzt wird, das Verfahren gemäß einem der Ansprüche 1 bis 6 durchzuführen.

## Revendications

1. Procédé de télémétrie, le procédé comprenant :

l'obtention (101) d'un premier signal d'écho qui est obtenu après que la lumière laser émise par un laser vers un objet mesuré est réfléchie par l'objet mesuré ;

lorsque le premier signal d'écho est un signal d'écho saturé (102), la détermination d'un degré de saturation du premier signal d'écho, **caractérisé en ce que** le premier signal d'écho comprend une pluralité de points d'échantillonnage, et la détermination d'un degré de saturation du premier signal d'écho comprend :

la détermination, dans la pluralité de points d'échantillonnage, du degré de saturation du premier signal d'écho sur la base d'une quantité de points d'échantillonnage saturés dont les valeurs d'amplitude sont supérieures ou égales à un second seuil dans le premier signal d'écho, le degré de saturation étant positivement corrélé à la quantité de points d'échantillonnage saturés, et une valeur d'amplitude correspondant au second seuil étant supérieure à une valeur d'amplitude correspondant à un premier seuil ;

la détermination d'un ou deux moments correspondants auxquels une valeur d'amplitude du premier signal d'écho correspond au premier seuil, et la détermination d'un moment antérieur des deux moments ou du moment unique comme le moment de réception du premier signal d'écho, une partie dont la valeur d'amplitude est inférieure au premier seuil dans le premier signal d'écho étant du bruit ;

le calcul (103) d'une distance initiale sur la base d'un moment de réception du premier signal d'écho, la distance initiale étant une distance entre l'objet mesuré et le laser ;

la détermination (104), sur la base d'une correspondance entre le degré de saturation et une valeur de compensation de distance, d'une valeur de compensation de distance cible correspondant au degré de saturation du premier signal d'écho ; et

la compensation (105) de la distance initiale à l'aide de la valeur de compensation de la distance cible, la distance obtenue après compensation étant utilisée comme distance mesurée entre l'objet mesuré et le laser.

2. Procédé selon la revendication 1, le premier signal d'écho étant un signal numérique, et la détermination d'un moment correspondant auquel une valeur d'amplitude du premier signal d'écho est le premier seuil, et la détermination du moment unique comme le moment de réception du premier signal d'écho comprenant :

l'adaptation, à au moins deux points d'échantillonnage dans la pluralité de points d'échantillonnage, d'une équation de front montant correspondante basée sur un signal d'écho partiel dans le premier signal d'écho, une variable indépendante de l'équation de front montant étant le temps, une variable dépendante étant l'amplitude, et le signal d'écho partiel étant un signal d'écho dont la valeur d'amplitude augmente au fur et à mesure que le temps s'écoule ; et la détermination, en fonction de l'équation de front montant, d'un moment correspondant où la valeur de l'amplitude correspond au premier seuil en tant que moment de réception du premier signal d'écho.

3. Procédé selon la revendication 1 ou 2, avant la compensation de la distance initiale en utilisant la valeur de compensation de la distance cible, le procédé comprenant en outre :

l'obtention d'une pluralité de signaux d'écho d'étalonnage, chacun de la pluralité de signaux d'écho d'étalonnage correspondant à un degré de saturation, la pluralité de signaux d'écho d'étalonnage étant obtenue après que la lumière laser émise par le laser vers un objet d'étalonnage a été réfléchie par l'objet d'étalonnage, et tous les signaux d'écho d'étalonnage de la pluralité de signaux d'étalonnage étant des signaux numériques ; le calcul d'une équation de front montant correspondante pour chacun de la pluralité de signaux d'écho d'étalonnage ; la détermination, en fonction de l'équation de front montant correspondant à chacun de la pluralité de signaux d'écho d'étalonnage, d'un moment correspondant où une valeur d'amplitude de chacun de la pluralité de signaux d'écho d'étalonnage est le premier seuil en tant que moment de réception de chacun de la pluralité de signaux d'écho d'étalonnage ; le calcul d'une distance entre l'objet d'étalonnage et le laser en utilisant le moment de réception de chacun de la pluralité de signaux d'écho d'étalonnage, afin d'obtenir une distance calculée correspondant à chacun de la pluralité de signaux d'écho d'étalonnage ; le calcul séparément des différences entre une distance réelle connue entre l'objet d'étalonnage et le laser et la pluralité de distances calculées, afin d'obtenir une pluralité de valeurs de compensation de distance dans l'étalonnage ;

et
la détermination de la correspondance sur la base de chaque valeur de compensation de distance dans la pluralité de valeurs de compensation de distance dans l'étalonnage et d'un degré de saturation correspondant à chaque valeur de compensation de distance.

4. Procédé selon l'une quelconque des revendications 1 à 3, le fait que le premier signal d'écho est un signal d'écho saturé comprenant :
lorsqu'une valeur d'amplitude maximale du premier signal d'écho est supérieure ou égale au second seuil, et que la quantité de points d'échantillonnage saturés dont les valeurs d'amplitude sont supérieures ou égales au second seuil dans le premier signal d'écho est supérieure ou égale à une quantité prédéfinie, le premier signal d'écho est le signal d'écho saturé.

5. Procédé selon l'une quelconque des revendications 1 à 4, le calcul d'une distance initiale sur la base d'un moment de réception du premier signal d'écho comprenant :

l'obtention, sur la base du moment de réception du premier signal d'écho et d'un moment d'émission du premier signal d'écho, d'un premier temps de vol de la lumière laser émise par le laser entre le laser et l'objet mesuré ; et l'obtention de la distance initiale par un calcul basé sur le premier temps de vol.

6. Procédé selon l'une quelconque des revendications 1 à 4, le calcul d'une distance initiale sur la base d'un moment de réception du premier signal d'écho comprenant :

l'obtention, sur la base du moment de réception du premier signal d'écho et d'un moment de réception d'un second signal d'écho, d'un second temps de vol de la lumière laser émise par le laser entre l'objet mesuré et un objet de référence, le second signal d'écho étant un signal d'écho obtenu après que la lumière laser émise par le laser vers l'objet de référence a été réfléchie par l'objet de référence ; l'obtention d'une distance entre l'objet mesuré et l'objet de référence par un calcul basé sur le second temps de vol ; et le calcul d'une somme de la distance réelle connue entre l'objet de référence et le laser et de la distance entre l'objet mesuré et l'objet de référence pour obtenir la distance initiale ; ou le calcul d'une différence entre la distance réelle connue entre l'objet de référence et le laser et la distance entre l'objet mesuré et l'objet de référence pour obtenir la distance initiale.

7. Appareil de télémétrie (700), l'appareil comprenant :

une première unité d'obtention (701), configurée pour obtenir un premier signal d'écho obtenu après que la lumière laser émise par un laser vers un objet mesuré est réfléchie par l'objet mesuré, **caractérisé en ce que** le premier signal d'écho comprend une pluralité de points d'échantillonnage ;
une première unité de détermination (702), configurée pour :

lorsque le premier signal d'écho est un signal d'écho saturé, déterminer un degré de saturation du premier signal d'écho ;
déterminer, dans la pluralité de points d'échantillonnage, le degré de saturation du premier signal d'écho sur la base d'une quantité de points d'échantillonnage saturés dont les valeurs d'amplitude sont supérieures ou égales à un second seuil dans le premier signal d'écho, le degré de saturation étant positivement corrélé à la quantité de points d'échantillonnage saturés, et une valeur d'amplitude correspondant au second seuil étant supérieure à une valeur d'amplitude correspondant à un premier seuil ;
une première unité de calcul (703), configurée pour calculer une distance initiale sur la base d'un moment de réception du premier signal d'écho, la distance initiale étant une distance entre l'objet mesuré et le laser ;
une deuxième unité de détermination (704), configurée pour déterminer, sur la base d'une correspondance entre le degré de saturation et une valeur de compensation de distance, une valeur de compensation de distance cible correspondant au degré de saturation du premier signal d'écho
une troisième unité de détermination, configurée pour déterminer un ou deux moments correspondants auxquels une valeur d'amplitude du premier signal d'écho est le premier seuil, et déterminer un moment antérieur des deux moments ou le moment unique comme le moment de réception du premier signal d'écho, une partie dont la valeur d'amplitude est inférieure au premier seuil dans le premier signal d'écho étant du bruit ; et
une unité de compensation (705), configurée pour compenser la distance initiale en utilisant la valeur de compensation de la distance cible, une distance obtenue après compensation étant utilisée comme une distance mesurée entre l'objet mesuré et le laser.

8. Appareil selon la revendication 7, le premier signal d'écho étant un signal numérique, et la troisième unité de détermination étant spécifiquement configurée pour :

adapter, à au moins deux points d'échantillonnage dans la pluralité de points d'échantillonnage, une équation de front montant correspondante basée sur un signal d'écho partiel dans le premier signal d'écho, une variable indépendante de l'équation de front montant étant le temps, une variable dépendante étant l'amplitude, et le signal d'écho partiel étant un signal d'écho dont la valeur d'amplitude augmente au fur et à mesure que le temps s'écoule ; et
déterminer, en fonction de l'équation de front montant, un moment correspondant où la valeur de l'amplitude est le premier seuil en tant que moment de réception du premier signal d'écho.

9. Appareil selon la revendication 7 ou 8, l'appareil comprenant en outre :

une deuxième unité d'obtention, configurée pour obtenir une pluralité de signaux d'écho d'étalonnage, chacun de la pluralité de signaux d'écho d'étalonnage correspondant à un degré de saturation, la pluralité de signaux d'écho d'étalonnage étant obtenue après que la lumière laser émise par le laser vers un objet d'étalonnage a été réfléchie par l'objet d'étalonnage, et tous les signaux d'écho d'étalonnage de la pluralité de signaux d'écho d'étalonnage étant des signaux numériques ;
une deuxième unité de calcul, configurée pour calculer une équation de front montant correspondante pour chacun de la pluralité de signaux d'écho d'étalonnage ;
une quatrième unité de détermination, configurée pour déterminer, en fonction de l'équation de front montant correspondant à chacun de la pluralité de signaux d'écho d'étalonnage, un moment correspondant où une valeur d'amplitude de chacun de la pluralité de signaux d'écho d'étalonnage est le premier seuil en tant que moment de réception de chacun de la pluralité de signaux d'écho d'étalonnage ;
une troisième unité de calcul, configurée pour calculer une distance entre l'objet d'étalonnage et le laser en utilisant le moment de réception de chacun de la pluralité de signaux d'écho d'étalonnage, afin d'obtenir une distance calculée correspondant à chacun de la pluralité de signaux d'écho d'étalonnage ;
une quatrième unité de calcul, configurée pour calculer séparément les différences entre une distance réelle connue entre l'objet d'étalonnage et le laser et la pluralité de distances calculées, afin d'obtenir une pluralité de valeurs de compensation de distance dans l'étalonnage ; et

une cinquième unité de détermination, configurée pour déterminer la correspondance sur la base de chaque valeur de compensation de distance dans la pluralité de valeurs de compensation de distance dans l'étalonnage et un degré de saturation correspondant à chaque valeur de compensation de distance.

10. Appareil selon l'une quelconque des revendications 7 à 9, le fait que le premier signal d'écho est un signal d'écho saturé comprenant :

lorsqu'une valeur d'amplitude maximale du premier signal d'écho est supérieure ou égale au second seuil, et que la quantité de points d'échantillonnage saturés dont les valeurs d'amplitude sont supérieures ou égales au second seuil dans le premier signal d'écho est supérieure ou égale à une quantité prédéfinie, le premier signal d'écho est le signal d'écho saturé.

11. Support de stockage lisible par ordinateur, comprenant des instructions, lorsque les instructions sont exécutées sur un ordinateur, l'ordinateur étant en mesure de réaliser le procédé selon l'une quelconque des revendications 1 à 6.

FIG. 1

EP 3 936 895 B1

101

System
memory 135

OS 137

Shell 139

Kernel 141

Application
143

Autonomous
driving related
program 147

103

Processor

133

Hard disk drive

131

Hard disk
drive interface

System bus 105

111

Bus bridge

107

Display
adapter

I/O bus

115

I/O
interface

125

USB
port

Network
interface

129

Display

109

Input device

Media tray

Transceiver

Sensor

153

117

121

123

Camera

155

Network

127

149

Software
deployment
server

FIG. 2

101

Obtain a first echo signal that is generated after laser light emitted by a laser to a measured object is reflected by the measured object

102

When the first echo signal is a saturated echo signal, determine a saturation degree of the first echo signal

103

Calculate an initial distance based on a receiving moment of the first echo signal, where the initial distance is a distance between the measured object and the laser

104

Determine, based on a correspondence between the saturation degree and a distance compensation value, a target distance compensation value corresponding to the saturation degree of the first echo signal

105

Compensate the initial distance by using the target distance compensation value, and use a distance obtained after compensation as a measured distance between the measured object and the laser

FIG. 3

201

Fit a corresponding rising edge equation based on a partial echo signal in a first echo signal, where an independent variable of the rising edge equation is time, a dependent variable is amplitude, and the partial echo signal is an echo signal whose amplitude value increases as time increases

202

Determine, according to the rising edge equation, a corresponding moment at which an amplitude value is a first threshold as a receiving moment of the first echo signal

FIG. 4

FIG. 5

FIG. 6a

FIG. 6b

700

Ranging apparatus

First obtaining unit 701

First determining unit 702

First calculation unit 703

Second determining unit 704

Compensation unit 705

FIG. 7

800

Ranging device

810

Processor

820

Communications
interface

840

830

Memory

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019004158 A1

- EP 2947477 A2